**Europäisches Patentamt**

**European Patent Office**

**Office européen des brevets**

(19)

(11) Publication number: **0 019 680**
A1

(12)

# EUROPEAN PATENT APPLICATION

(21) Application number: **79830042.2**

(22) Date of filing: **29.10.79**

(51) Int. Cl.³: **F 01 N 3/04**

(30) Priority: **08.01.79 IT 4650279**
**05.09.79 IT 4651279**

(43) Date of publication of application: **10.12.80**
**Bulletin 80/25**

(84) Designated Contracting States: **BE DE FR GB LU NL**

(71) Applicant: **Treccosti, Salvatore, Via B. Buozzi 36,**
**I-89100 Reggio Calabria (IT)**

(72) Inventor: **Treccosti, Salvatore, Via B. Buozzi 36,**
**I-89100 Reggio Calabria (IT)**

(54) **Exhaust gases and fumes humidifier.**

(57) A device for purification of exhaust gases comprising a stainless steel tubular casing (1) for the passage of exhaust gases, wherein a plurality of perforated conical shaped buffles (2) are disposed. A spray nozzle connected to a supply pipe (3) is adapted to discharge water into the casing (1) for humidifying the exhaust gases.

EP 0 019 680 A1

## Description Form of Industrial Invention

Description of the Industrial Invention with the title
"Exhuast  gases and fumes Humidifier" by Salvatore
Treccosti, Italian, presently residing at Via Bruno Buozzi,
36, Reggio Calabria, Italy.

### Description

The Exhaust gases and fumes Humidifier completely eliminates
air pollution caused by exhaust gases or fumes  from the
smallest internal-combustion engine to the largest  industrial
conveyer. It can be applied to exhaust pipes before or after
the silencer (if the muffler isn't corridible). For the large
conveyers one or more Humidifiers opportunately colligated
to the walling are applied to the outer wall thus eliminating
the stack and humidifing the gases  or fumes to the ground
or making the possible  residues discharge into a tank to e-
nable them to be treated if needed be.  Humidification of the
gases occurs by means of a small quantity of water held in a
container which  enalbles it to reach the Humidifier through
a small downward and resuction pipe. The gas, on contact with
the water, becomes impregnated by a deviced system and  deposits itself, discharges to the ground in liquid state, without
expanding in the air. The system is the same for large conveyers except that if the large gas or fume mass has  not an
adequate thrust inorder to pass into  the device or  into
the group of  devices, a forced trust or a forced aspiration
will be provided by a colligated aspirator with opportune
flanges at the heads  of the devices. The advantages  of the
system of humidification under examination are many:

a) The exhaust gases and fumes (of different types) on  contact  with the water lose their toxicity through a  chemical reaction with the substances that compose water;

b) The exhaust gases and fumes impregnating in the devices
   of humidification tend to deposit onto the ground, rather
   than extending into the air with all the inconveniences
   that can derive;

c) The Humidifier applied to the exhaust pipes of the internal
   combustion engine, remarkably cuts down combustion noises
   as well, with great advantages foe people or for the environment in which we live in.

Costruction of the Humidifier does not need any particular
and expensive materials, nor sophisticated fixtures or
highly specialized workers. The materials needed come down
to simple pipes and steel perforated sheet iron or stainless
steel which lasts longer; Other materials can also be used.
The water container can be built in galvanized thin plate
and in several sizes. It is equipped with an ordinary water
tap on fixed means or devices; with an electromagnetic valve
for mobile buses, lorries and light machinery or else with
a self-contained automatic system, by means of an air press
situated at the discharge of clean gases that carries the
air to the water container through a pipe, and which with a
light pressure exerted in the tank, brings the water out
through a small upward pipe to automatically feed the Humidifier. Consumption of the water varies according to the
quantity of fumes or gases to be humidified. Devices in operation. Testdone. Example - 1000 c.c. about one litre per
hour, to reach about 4litres on large 8 cylinder lorry engines. Presently there are no existing devices capable of
producing even in small measures the advantages of the said
system of humidification. Infact, all the gases and fumes
exhausts from internal combustion engines and from industrial
conveyers let the same gases and fumes expand into the air
freely provoking serious environmental pollution promblems.
Furthermore, such equippment contain no device that modifies
in the least the toxicity of exhuast gases.

"The Exhaust gases and fumes Humidifer" is composed of:

1) an outer cylinder shaped covering; it can be curved
   shaped at the extremity of the discharge; it also holds
   caps for cleaning.

2) one or more perforated sheet iron cones (two, three; four
   etc.), shaped so that the surface of the holes is
   proportioned to the quantity of gas to be freely ejected,
   and with at least a 15% allowance of each cone lelement
   applied.

3) a small stainless steel nozzle pipe which verses the water
   onto the rear cone and which comes with an outer orifice
   already set foe the quantity of  the water to be dosed.
   It can come withmore  nozzles on large devices. The cone
   shapeof the perforated surface forces the gases which
   already have a pressure, and those without one having
   come from the engine or conveyer to spray the water
   coming from the nozzle pipe and therefore to disintergrate,
   become impregnated with the water itself and to become moist.
   The gases, being impregnated on the first cone,  discharge
   through the holes on the second or third cone or the
   following cones which complete the  humidification and
   discharge operations.  The exhaust gases, passing through
   the cones, become impregnated with the water and go through
   a transformation which render them non-toxic. The described
   humidifier must be put in a horizontal position at about
   180  degrees.

0019680

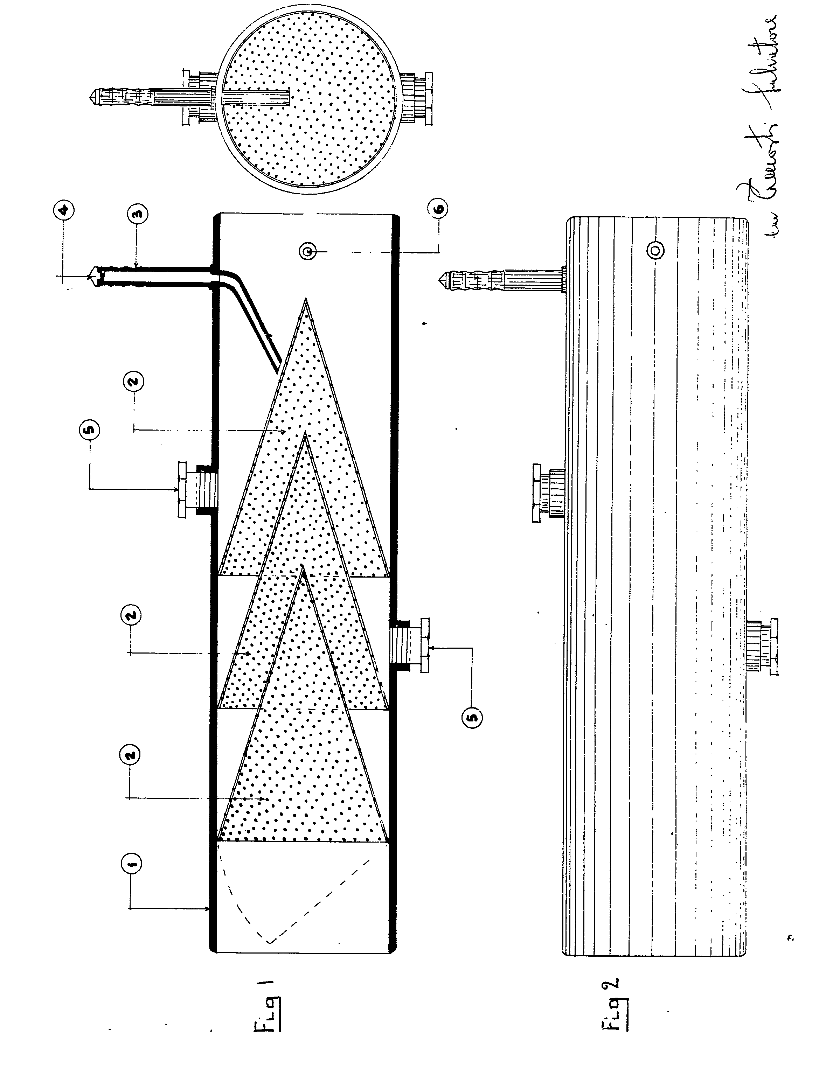

CLAIMS

1. Stainless steel covering

2. Perforated cones in stainless steel sheet

3. Stainless steel shaped nozzle

4. Threaded brass orifice

5. Caps for cleaning

# S T A T E M E N T
---------------

In his letter dated September 18th, 1980, which was received
on 25.09.1980 by the European Patent Office, the Applicant
requested that the following corrections of obvious errors
made in the originally filed text of the description should
be allowed.

| PAGE | LINE | | |
|------|------|---|---|
| 1 | 12 | : "large industrial conveyors" instead of | "large conveyors" |
| 2 | 4 | : "environment" instead of | "enviornment" |
| 2 | 11 | : "means or" instead of | "means of transportation or" |
| 2 | 12 | : "for buses" instead of | "for mobile buses" |
| 2 | 13 | : "light machinery or" instead of | "light cars or" |
| 2 | 25 | : "large conveyors" instead of | "large industrial conveyors" |
| 2 | 26 | : "expand freely" instead of | "expand into the air freely" |
| 2 | 26 | : "environmental" instead of | "enviornmental" |
| 2 | 27 | : "equipment" instead of | "eqipment" |
| 2 | 31 | : "discharges" instead of | "discharge" |
| 3 | 17 | : "renders" instead of | "render" |

The above mentioned corrections are allowed under Rule 88.

The Hague, 30th October 1980.

RECEIVING SECTION,

M.K.R.Körner.

Fig 1

Fig 2

**PARTIAL EUROPEAN SEARCH REPORT**
which under Rule 45 of the European Patent Convention
shall be considered, for the purposes of subsequent
proceedings, as the European search report

European Patent Office

Application number

EP 79 83 0042

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | <u>DE - C - 277 246</u> (ADLOFF) <br> * Page 1, line 20 to page 2, line 3; figures 1-6 * <br><br> -- <br><br> <u>FR - A - 385 004</u> (WAKLEY) <br> * Page 3, line 34 to page 3, line 104; figures 1-9 * <br><br> -- <br><br> <u>US - A - 2 485 555</u> (BESTER) <br> * Column 3, lines 8-44; figures 1-6 * <br><br> -- <br><br> <u>DE - C - 204 866</u> (HERZOG) <br> * Page 1, lines 1-67; figures * <br><br> -- <br><br> <u>GB - A - 1 080 733</u> (WALKER) <br> * Page 2, lines 8-10; 53-55; 61-66; figure 1 * <br><br> -- ./. | | F 01 N   3/04 <br><br><br><br><br><br> TECHNICAL FIELDS SEARCHED (Int. Cl.³) <br><br> F 01 N |

| **INCOMPLETE SEARCH** | CATEGORY OF CITED DOCUMENTS |
|---|---|
| The Search Division considers that the present European patent application does not comply with the provisions of the European Patent Convention to such an extent that it is not possible to carry out a meaningful search into the state of the art on the basis of some of the claims. <br> Claims searched completely: <br> Claims searched incompletely: <br> Claims not searched: <br> Reason for the limitation of the search: <br><br> The claims 1-5 do not correspond to the prescriptions of rule 29(1)(a)(b) EPC and therefore a meaningful search is not possible on the basis of these claims. The search was thus mainly based on the description and the drawings. | X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

| Place of search | Date of completion of the search | Examiner |
|---|---|---|
| The Hague | 16-04-1980 | HAKHVERDI |

EPO Form 1505.1  06.78

0019680

European Patent Office

**PARTIAL EUROPEAN SEARCH REPORT**

Application number
EP 79 83 0042
-2-

| | DOCUMENTS CONSIDERED TO BE RELEVANT | | CLASSIFICATION OF THE APPLICATION (Int. Cl.¹) |
|---|---|---|---|
| Category | Citation of document with indication, where appropriate, of relevant passages | Relevant to claim | |
| | ENGINEERING MATERIALS AND DESIGN, vol. 20, nr. 4, April 1976, "Stainless exhaust progress", page 7. <br> * Whole article * <br><br> ---- | | |
| | | | TECHNICAL FIELDS SEARCHED (Int. Cl.³) |

EPO Form 1505.3   06.78